# EUROPÄISCHE PATENTSCHRIFT

(11) **EP 2 706 327 B1**
(45) Veröffentlichungstag und Bekanntmachung des Hinweises auf die Patenterteilung: **18.11.2020**
(21) Anmeldenummer: 13003725.2
(22) Anmeldetag: 25.07.2013
(51) Int. Cl.: G01F 1/84, G01F 15/02

(54) **Coriolis Durchflussmessgerät**
Coriolis flow measuring device
Appareil de mesure de débit du type Coriolis

(30) Priorität: 10.09.2012 DE 102012017797
(43) Veröffentlichungstag der Anmeldung: 12.03.2014
(73) Patentinhaber: Krohne AG, 4019 Basel (CH)
(72) Erfinder: Hussain, Yousif, Dr., Weston Favell, Northampton NN 3 3 DA (GB); Rolph, Christopher, Hartwell, Northants NN7 2HA (GB); Wang, Tao, Dr., Canterbury, Kent CT2 9DG (GB)
(74) Vertreter: Gesthuysen Patent- und Rechtsanwälte

(56) Entgegenhaltungen:
- WO-A1-00/42393
- WO-A1-01/18501
- WO-A1-2012/028425
- JP-A- H0 979 882
- JP-A- S63 204 103
- US-A- 5 753 827
- US-A1- 2003 200 816

## Beschreibung

Die Erfindung betrifft ein Durchflussmessgerät, das nach dem Coriolis-Prinzip arbeitet, mit einer von einem Medium durchströmbaren Führungsstruktur. Dabei sind auf einer Außenseite der Führungsstruktur mindestens zwei Sensorelemente zur Bestimmung und/oder Überwachung mindestens einer Prozessgröße aufgebracht. Weiterhin ist eines der zwei Sensorelemente als Dehnungs- und das andere als Temperaturmesselement ausgestaltet.

Coriolis-Massedurchflussmessgeräte werden vor allem in der industriellen Prozessmesstechnik bei solchen Anwendungen eingesetzt, die hohe Messgenauigkeiten erforderlich machen. Die Funktionsweise von Coriolis-Massedurchflussmessgeräten beruht darauf, dass wenigstens ein von einem Medium durchströmtes Messrohr - als Teil einer entsprechenden Führungsstruktur, die von besagtem Medium durchströmt wird - von einem Schwingungserzeuger zu einer Schwingung angeregt wird. Das massebehaftete Medium wirkt dabei aufgrund der von zwei zueinander orthogonalen Geschwindigkeiten - die der Strömung und die des Messrohres - hervorgerufenen Coriolis-Trägheitskraft auf die Wandung des Messrohrs rück, wodurch die Schwingung des Messrohrs eine Änderung erfährt im Vergleich zu einer Schwingung des Messrohrs ohne das strömende Medium. Durch Erfassung von Kenngrößen der Schwingungen des durchströmten Messrohrs - wie insbesondere der Phasendifferenz und damit Zeitdifferenz zwischen den Auslenkungen zweier Messrohrbereiche, die im undurchströmten Zustand des Messrohres in Phase schwingen - kann der Massedurchfluss durch das Messrohr mit hoher Genauigkeit bestimmt werden. Daher finden Coriolis-Massedurchflussmessgeräte häufig auch im eichpflichtigen Verkehr Anwendung.

Um solch hohe Genauigkeitsanforderungen einhalten zu können, muss der Zustand des Coriolis-Massedurchflussmessgeräts genau erfasst und müssen das Messergebnis beeinflussende Größen bei der Berechnung des Massedurchflusses berücksichtigt werden. Dazu gehören informationstragende Signale, also die Anregungssignale (Ströme und/oder Spannungen) und die interessierenden Primärmesssignale - also die Auslenkungen des Messrohres -, aber auch andere Einflussgrößen, wie beispielsweise die Temperatur oder mechanische Spannungen an signifikanten Stellen des Messrohres. Diese Kenngrößen werden dann in die Kalkulation des Messwertes einbezogen, wobei auf Modellrechnungen bzw. Kalibrierungsdaten zurückgegriffen wird.

Eine Messanordnung mit Spannungs-, Längenänderungs- oder Temperatursensoren für eine Korrektur der Messwerte beschreiben beispielsweise die Offenlegungsschrift DE 102 56 376 A1 oder die Patentschriften DE 42 24 379 C1 und US 5,381,697. Über Dehnungssensoren wird gemäß der Lehre der Patentschrift US 6,684,715 B1 die Schwingung des Messrohrs selbst detektiert. Gemäß der JP 09079882 finden ebenfalls Dehnungssensoren Anwendung bei einem Coriolis-Massedurchflussmessgerät.

Die US 2003/0200816 A1 beschreibt ein Durchflussmessgerät mit einem Messrohr, das zu Resonanzschwingungen angeregt wird. Durch einen externen Temperatursensor wird die Temperatur des Mediums gemessen und durch einen externen Drucksensor wird der Druck des Mediums ermittelt. Für die Druckmessung sind vier auf dem Messrohr befestigte Dehnungsmessstreifen so zu einer Brücke verschaltet, dass die Temperatur die Messungen der Dehnungsmessstreifen nicht beeinflusst. Es wird also eine Temperaturkompensation der Druckmessung bewirkt.

Coriolis-Massedurchflussmessgeräte mit auf einem Messrohr befindlichen und voneinander getrennten Dehnungs- und Temperatursensoren beschreiben die US 5,753,827 A oder die WO 00/42393 A1.

Ein Coriolis-Massedurchflussmessgerät mit vier Messrohren, auf denen Dehnungs- und Temperatursensoren angeordnet sind, offenbart die WO 2012/028425 A1.

Die JP S63-204103 beschreibt eine Kraftmessdose, bei der ein temperaturabhängiger Widerstand mit einer Messbrücke aus Dehnungsmessstreifen in Reihe geschaltet ist, wobei der temperaturabhängiger Widerstand zur Kompensation von Temperatureffekten dient, nicht aber zur Erfassung eines Temperaturmesswertes.

Coriolis-Massedurchflussmessgeräte eignen sich nicht nur zur Bestimmung eines Massedurchflusses, vielmehr können sie auch beispielsweise zur Bestimmung der Fluiddichte und der Viskosität des Mediums verwendet werden, genau so wie sie auch zur Erfassung von Diagnoseparametern geeignet sind, wie beispielsweise die Erfassung einer mehrphasigen Strömung oder die Erfassung von Ablagerungen. Auch hinsichtlich dieser Größen besteht ein starkes Interesse an einer möglichst präzisen und vor allem dauerhaft präzisen Erfassung der Messwerte.
Schwierigkeiten bei der Anwendung von Messgeräten in der Prozessautomatisierung bereiten häufig die beengten Platzverhältnisse, die es erforderlich machen, dass die Messgeräte möglichst klein und kompakt ausgeführt sind.

Aufgabe der vorliegenden Erfindung ist es daher, ein Durchflussmessgerät vorzuschlagen, das eine möglichst hohe Messgenauigkeit bei einem möglichst reduzierten Platzbedarf ermöglicht.

Die zuvor hergeleitete und dargestellte Aufgabe ist bei dem Durchflussmessgerät, von dem die vorliegende Erfindung ausgeht, dadurch gelöst, dass das Dehnungsmesselement und das Temperaturmesselement elektrisch in Reihe geschaltet sind und dass ein Spannungsabfall über die einzelnen Sensorelemente gemessen wird und zwar in Verbindung mit einem Mittenabgriff über jedes Sensorelement einzeln, d. h. über einen gleichsam zu beiden Sensorelementen gehörigen Kontakt.. Die Prozessgröße, die über das Sensorelement bestimm- bzw. überwachbar wird, dient dabei je nach Ausgestaltung der eigentlichen Messung, d. h. der Aufnahme der Schwingungen der Führungsstruktur oder einer Verbesserung der Messgenauigkeit. Je nach Ausgestaltung wird also entweder die primäre Messgröße oder eine ergänzende Messgröße bestimmt bzw. überwacht. Durch das Aufbringen auf der Außenseite der Führungsstruktur werden insbesondere Dichtungsprobleme vermieden bzw. es kann ggf. eine leichtere Adaption bei bereits installierten Einheiten vorgenommen werden. Zudem wird auch nicht der Fluss des Mediums durch hineinragende Elemente gestört.
Bei dem zu messenden Medium handelt es sich insbesondere im Allgemeinen um ein fließfähiges Medium, z. B. eine Flüssigkeit, ein Gas oder eine beliebige Kombination, wobei auch Feststoffe Teil des Mediums sein können.

Bei dem Durchflussmessgerät handelt es sich um ein Coriolis-Massedurchflussmessgerät.

Ein Dehnungsmesselement als Sensorelement erlaubt die Messung der Auslenkung eines Messrohrs bzw. einer Messleitung oder auch der Spannungen, die in der Führungsstruktur auftreten können (z. B. durch den Druck im Medium oder durch die Temperatureffekte in Folge der Temperatur des Mediums oder durch die Schwingungserzeugung oder durch äußere Kräfte, die auf die Führungsstruktur einwirken). Die Messgenauigkeit wird daher beispielsweise in einer Ausgestaltung erhöht, indem zusätzlich zu einem z. B. elektromagnetisch betriebenen Schwingungsaufnehmer das Dehnungsmesselement die Schwingungen der Führungsstruktur aufnimmt und beide Messungen miteinander verrechnet werden. Alternativ dient das Dehnungsmesselement der Messung bzw. Überwachung von Spannungen in der Führungsstruktur. Ein Dehnungsmesselement sei daher generell verstanden als Messelement zur Messung bzw. Überwachung einer Längenänderung oder einer mechanischen Spannung des Bauteils, auf dem das Dehnungsmesselement angebracht ist.

Der Temperatursensor als Sensorelement dient der Messung und/oder Überwachung einer Temperatur der Führungsstruktur oder - ggf.
damit verbunden - des Mediums. Da die Temperatur sich ebenfalls auf das Schwingungsverhalten auswirkt, ist
ein entsprechender Sensor vorgesehen, um die Auswirkungen der Temperatur anhand bekannter Abhängigkeiten passend bei der Auswertung und bei der Bestimmung des Durchflusses zu beachten.

In einer Ausgestaltung wird die Montage vereinfacht bzw. wird ein Schutz des Sensorelements erzeugt, indem das mindestens eine Sensorelement zumindest teilweilweise auf einem Trägerelement angeordnet ist. Bei der Fertigung wird beispielsweise mindestens das eine Sensorelement auf das Trägerelement aufgebracht und fixiert und dann erst auf die Außenseite der Führungsstruktur aufgebracht. Alternativ wird das Trägerelement abschließend auf die mit dem mindestens einen Sensorelement versehene Außenseite der Führungsstruktur befestigt.

In einer Variante verfügt die Führungsstruktur über mindestens eine rohrförmige Messleitung. Hierfür ist das Trägerelement derartig ausgestaltet und auf die Messleitung abgestimmt, dass das Trägerelement zumindest um einen Teil der Messleitung herumlegbar ist. Das Trägerelement ist daher in gewissen Grenzen elastisch, so dass es sich vorzugsweise auch der zylindrischen Struktur der rohrförmigen Messleitung anpasst.

Alternativ besteht das Trägerelement aus einem Material, das unter gewissen Bedingungen verformbar und sonst insbesondere starr ist.

Durch ein Trägerelement kann darauf Rücksicht genommen werden, dass der für das Durchflussmessgerät zur Verfügung stehende Raum beschränkt ist bzw. darauf, dass die Fertigung vereinfacht bzw. beschleunigt werden soll. Für die Fertigung ergibt sich auch der Vorteil einer Vorpositionierung der Sensorelemente und ggf. weiterer Bauteile, die auf der Außenseite der Führungsstruktur anzubringen sind.

In einer Ausgestaltung sind nur die Sensorelemente einer Messleitung auf einem Trägerelement angeordnet und in einer alternativen Ausgestaltung befinden sich auf einem Trägerelement die Sensorelemente, die mehr als nur einer Messleitung zugeordnet sind. In der letzteren Ausgestaltung überdeckt damit das Trägerelement gleichsam mindestens zwei Messleitungen als Teile der Führungsstruktur.

Das Trägerelement ist dabei in einer Ausgestaltung mit einer Kleberschicht versehen oder selbst eine Klebesubstanz. In einer weiteren Ausgestaltung besteht das Trägerelement zumindest teilweise aus einem Klebeband. Alternativ oder ergänzend wird das mindestens eine Sensorelement mit einer Abdeckung oder einer Beschichtung versehen.

In einer Ausgestaltung liegen sich auf der Führungsstruktur oder speziell auf einer im Wesentlichen rohr- oder zylinderförmigen Messeinheit die mindestens zwei Sensorelemente diametral einander gegenüber.

In einer Ausgestaltung sind mindestens zwei Dehnungsmesselemente vorgesehen. Dabei sind die zwei Dehnungsmesselemente im Wesentlichen mit der gleichen Orientierung relativ zu einer Längsachse der Führungsstruktur angeordnet. Die Sensorelemente dienen daher einer Bestimmung bzw. Überwachung einer Längenänderung der Führungsstruktur in die gleiche Richtung, jedoch an unterschiedlichen Orten. Beide Sensorelemente sind dabei in einer Ausgestaltung in Richtung der Längsachse orientiert und messen in einer alternativen Ausgestaltung senkrecht zu der Längsachse, dabei jedoch im Wesentlichen parallel zueinander. In anderen Ausgestaltungen sind die Dehnungsmesselemente in einer beliebigen Zwischenposition relativ zur Längsachse angeordnet. Die Sensorelemente sind daher entweder axial entlang einer Längsachse der Führungsstruktur oder radial bzw. umfänglich um die Führungsstruktur unterschiedlich positioniert bzw. in Bezug auf ihre Messrichtung (z. B. der Strecke entlang der eine Längenänderungen bestimmt wird) orientiert. Ergänzend befinden sich die Sensorelemente axial und radial bzw. umfänglich an unterschiedlichen Positionen.

In einer alternativen Ausgestaltung sind die mindestens zwei als Dehnungsmesselemente ausgestalteten Sensorelemente mit unterschiedlichen Orientierungen relativ zur Längsachse der Führungsstruktur angeordnet. Dabei ist insbesondere ein Dehnungsmesselement im Wesentlichen entlang der Längsachse der Führungsstruktur angeordnet, wohingegen das andere Dehnungsmesselement im Wesentlichen senkrecht zu der Längsachse angeordnet ist. Dadurch erlaubt das eine Messelement die Messung der axialen Spannung bzw. axiale Längenänderung und das andere die Messung der umfänglichen Spannung bzw. Umfangsänderung.

Viele Sensorelemente sind insbesondere auf eine elektrische Kontaktierung angewiesen, um mit elektrischer Energie versorgt zu werden bzw. um die für die Messung bzw. Überwachung der Prozessgröße verwendete(n) Kenngröße(n) des Sensorelements zu ermitteln. So ändert sich beispielweise der elektrische Widerstand von besonderen Elementen unter der Einwirkung der Temperatur bzw. von Dehnung oder Streckung auf das Element, so dass aus der Ermittlung des elektrischen Widerstand über entsprechende Kalibrierungskurven auf die Temperatur bzw. auf Längenänderungen geschlossen werden kann. Bei den Leitungen bzw. Kontaktierungen handelt es sich beispielsweise um Drähte usw.

Um die Anzahl der elektrischen Leitungen und damit auch die Kosten bzw. den Raumbedarf zu reduzieren, ist erfindungsgemäß vorgesehen, dass zwei Sensorelemente elektrisch in Reihe geschaltet sind. Durch die Reihenschaltung kann zumindest eine elektrische Zuleitung entfallen.

Erfindungsgemäß wird der Spannungsabfall über die einzelnen Sensorelemente gemessen , so ist immer noch ein Abgriff zwischen den Sensorelementen erforderlich. Der elektrische Strom wird in einer Ausgestaltung vorzugsweise über alle Sensorelemente gemessen.

In einer Variante wird bei beiden - unterschiedlich ausgeprägten - Sensorelementen die Abhängigkeit des elektrischen Widerstands für die Bestimmung und/oder Überwachung der jeweiligen Prozessgröße (Dehnung bzw. Temperatur) umgesetzt. Diese Sensorelemente lassen sich separat elektrisch kontaktieren.

Erfindungsgemäß sind das Dehnungsmesselement und das Temperaturmesselement elektrisch in Reihe geschaltet. Daher wird der elektrische Strom über die zwei jeweils nur einem Sensorelement zugeordnete elektrische Kontakte durch beide Sensorelemente gemessen und die elektrische Spannung wird in Verbindung mit einem Mittenabgriff über jedes Sensorelement einzeln, d. h. über einen gleichsam zu beiden Sensorelementen gehörigen Kontakt gemessen. In dieser Reihenschaltung wird daher wenigstens ein Kontaktelement, beispielsweise ein Kabel eingespart, was auch dem beschränkten Raumangebot entgegenkommt.

In einer Ausgestaltung weist die Führungsstruktur für das Medium mindestens eine Messleitung auf, die vom Medium durchströmt werden kann. Bei der Messleitung handelt es sich beispielsweise um ein Messrohr.

In einer erweiterten Ausgestaltung verfügt die Führungsstruktur über mindestens zwei Messleitungen, die von dem Messmedium durchströmt werden und die vorzugsweise für die Messung des Durchflusses zu Schwingungen angeregt werden.

In einer Ausgestaltung entspricht die Anzahl der Sensorelemente zumindest der Anzahlt der Messleitungen und ist in einer Ausgestaltung größer als die Anzahl der Messleitungen.

In einer zusätzlichen Ausgestaltung ist die Anzahl der Sensorelemente jedoch kleiner als die Anzahl der Messleitungen, so dass nicht jede Messleitung mit einem Sensorelement versehen ist. Letztere Ausgestaltung zeichnet sich insbesondere durch die reduzierten Kosten und den geringeren Platzbedarf aus.

In einer Ausgestaltung sind mindestens zwei Sensorelemente vorgesehen und die Führungsstruktur weist mindestens zwei Messleitungen auf. Dabei ist jeweils mindestens ein Sensorelement auf einer Außenseite einer Messleitung angeordnet. Weiterhin sind die Sensorelemente derartig auf den jeweils zugeordneten Messleitungen angeordnet, dass die relativen Positionen der Sensorelemente umfänglich um die jeweilige Messleitung unterschiedlich sind. So ist beispielsweise ein Sensorelement oberhalb einer Messleitung und das andere Sensorelement ist unterhalb der anderen Messleitung angeordnet. Weiterhin könnten die Sensorelemente auch entlang der Längsachse der Führungsstruktur auf unterschiedlichen Höhen angeordnet sein. In einer alternativen Ausgestaltung liegen sich die Sensorelemente auf der gleichen axialen Höhe einander gegenüber. In einer zusätzlichen alternativen Ausgestaltung ist auch jeweils ein Sensorelement an einer Messleitung angeordnet, wobei die relativen Positionen der Sensorelemente an den Messleitungen im Wesentlichen gleich sind.

Die unterschiedliche Position umfänglich um die Messleitungen führt dazu, dass in einer Ausgestaltung die Sensorelemente jeweils in einem anderen Winkelbereich in einer Ebene senkrecht auf einer Längsachse der Führungsstruktur angeordnet sind. In einer alternativen Ausgestaltung befinden sich die Sensorelemente jeweils im gleichen Winkelbereich. Dabei können die Ebenen, die zur Betrachtung bzw. zum Vergleich der Winkelbereiche herangezogen werden, miteinander zusammenfallen oder parallel zueinander hintereinander angeordnet sein, was auch wiederspiegelt, dass in einer Ausgestaltung die Sensorelemente auf unterschiedlichen Höhen entlang der Längsachse der Führungsstruktur angeordnet sind.

Allgemein lässt sich daher formulieren, dass in dem Fall, dass die Führungsstruktur mehrere Messleitungen aufweist und das Durchflussmessgerät über mehrere Sensorelemente verfügt, die Sensorelemente umfänglich auf jeweils anderen Positionen der Messleitungen angebracht sind. Alternativ oder ergänzend befinden sich die Sensorelemente auf den Messleitungen axial auf unterschiedlichen Höhen bezogen auf eine Längsachse der Führungsstruktur.

In einer Ausgestaltung sind die zwei Sensorelemente derartig jeweils auf einer Messleitung angeordnet, dass die zwei Sensorelemente sich umfänglich einander gegenüberliegen. Die zwei Sensorelemente sind in dieser Ausgestaltung umfänglich um 180° zueinander versetzt, so dass in einer Variante ein Sensorelement auf seiner Messleitung oben und das andere Sensorelement auf seiner Messleitung unten angeordnet ist. Würden daher beide Sensorelemente auf einer gemeinsamen Messleitung platziert sein, so würden sie sich diametral einander gegenüberliegen. Durch die Verteilung auf mehrere Messleitungen lässt sich der zur Verfügung stehende Raum effektiver ausnutzen und es kann dennoch eine genauere Messung durch die Auswirkungen von Prozessbedingungen oder des Mediums auf unterschiedliche Stellen der Führungsstruktur vorgenommen werden. Aus den Messdaten der Sensorelemente für die einzelnen Messleitungen wird dabei beispielsweise in einer Ausgestaltung auf die umfängliche Messsituation einer gleichsam gemeinsam gebildeten Messleitung rückgerechnet.

In einer Ausgestaltung wird die Anzahl der Messleitungen der Führungsstruktur auf mindestens vier erhöht. Dabei sind die vier Messleitungen in einer Ausgestaltung in zwei Zweierreihen übereinander und damit auch in zwei Zweierspalten nebeneinander angeordnet. Es wird insbesondere ein Rechteck oder sogar ein Quadrat durch die vier Messleitungen aufgespannt, in Abhängigkeit vom gewählten Abstand zwischen den Messleitungen.

In einer Ausgestaltung sind für die vier Messleitungen gemäß der vorgehenden Ausgestaltung nur zwei Sensorelemente vorgesehen, von denen jeweils eines einer Messleitung zugeordnet ist. Dabei sind die relativen Positionen der Sensorelemente umfänglich um die jeweilige Messleitung jeweils unterschiedlich. Insbesondere befindet sich in einer Ausgestaltung ein Sensorelement oberhalb einer und das andere Sensorelement unterhalb der anderen Messleitung. Die Messleitungen, die mit den Sensorelementen bestückt sind, befinden sich dabei in unterschiedlichen Reihen und in unterschiedlichen Spalten der vier Messleitungen. Umfänglich sind damit die Sensorelemente wie bei einer der vorhergehenden Ausgestaltungen um 180° zueinander versetzt.

In einer weiteren Ausgestaltung sind für die vier Messleitungen vier Sensorelemente vorgesehen, die jeweils umfänglich um 90° zueinander versetzt sind. Bei einer Anzahl von n Sensorelementen sind diese daher allgemein vorzugsweise um 360°/n umfänglich zueinander versetzt, wobei n eine natürliche Zahl größer als eins ist.

Diese Art der Verteilung von mehrere Sensorelementen kann entsprechend auch bei einer Messleitung vorgenommen werden, so dass in einer Ausgestaltung beispielsweise drei Sensorelemente um 120° zueinander versetzt um eine Messleitung herum angeordnet sind.

Im Einzelnen gibt es eine Vielzahl von Möglichkeiten, das erfindungsgemäße Durchflussmessgerät auszugestalten und weiterzubilden. Dazu wird verwiesen einerseits auf die dem Patentanspruch 1 nachgeordneten Patentansprüche, andererseits auf die folgende Beschreibung von Ausführungsbeispielen in Verbindung mit der Zeichnung. In der Zeichnung zeigen
- Fig. 1: ein Durchflussmessgerät in schematischer räumlicher Darstellung,
- Fig. 2: ein Teil einer alternativen Ausgestaltung eines Durchflussmessgeräts in einer schematischen Draufsicht,
- Fig. 3: eine erfindungsgemäße Ausgestaltung,
- Fig. 4: ein erfindungsgemäßes Durchflussmessgerät in einer beispielhaften schematischen Ausgestaltung als Schnitt,
- Fig. 5: ein weiteres beispielhaftes erfindungsgemäßes Durchflussmessgerät als Schnitt und
- Fig. 6: ein weiteres Ausführungsbeispiel eines erfindungsgemäßen Durchflussmessgerätes in der Schnittdarstellung.

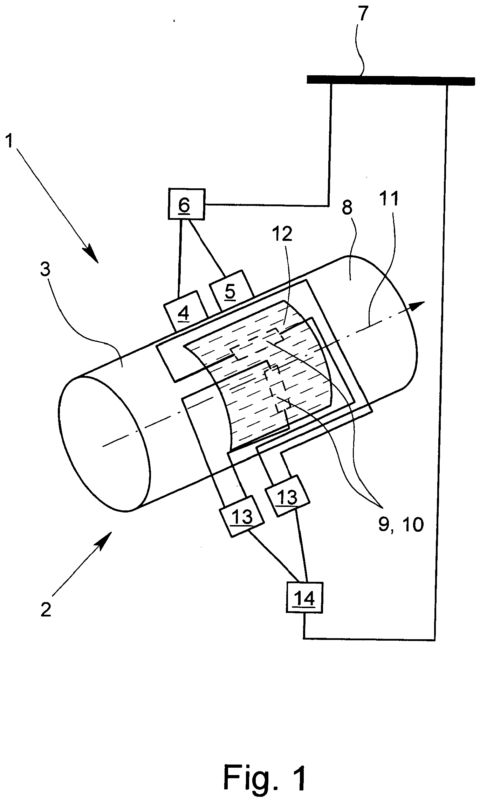

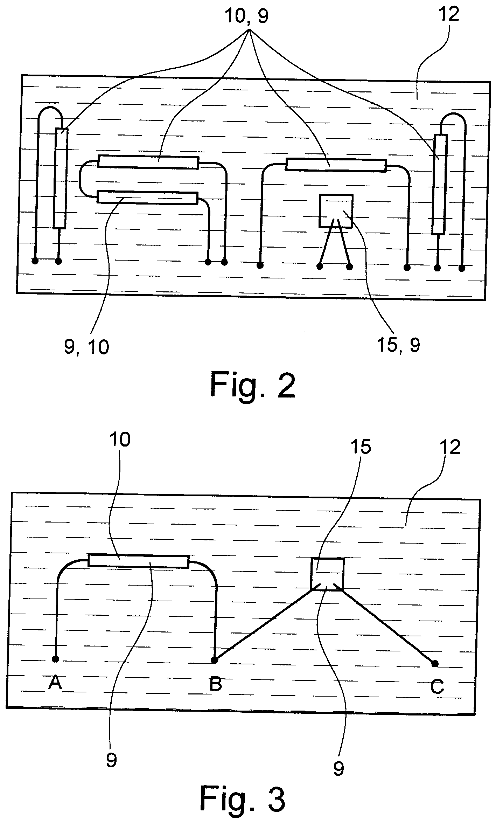

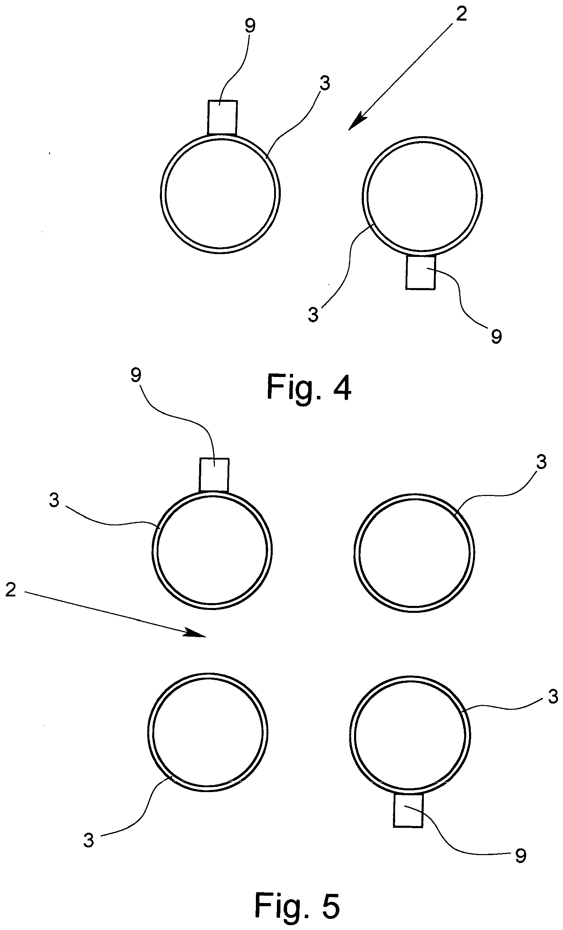

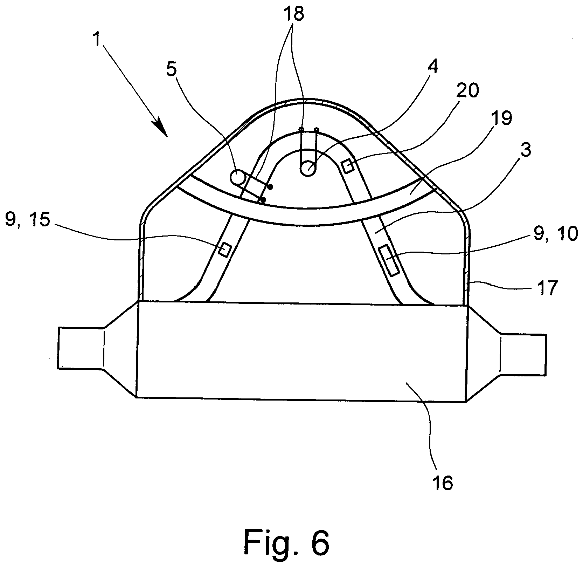

In der Fig. 1 ist eine räumliche Darstellung einer ersten Ausgestaltung eines Durchflussmessgerätes 1 dargestellt. Die Fig. 2 und 3 zeigen jeweils Sensorelemente 9 auf einem Trägerelement 12. In den Fig. 4 und 5 wird für jeweils eine andere Ausgestaltung der Führungsstrukturen 2 die Variation der Anordnung der Sensorelement 9 gezeigt. Die Fig. 6 zeigt im Schnitt eine zusätzliche Variante eines Durchflussmessgerätes 1.

Die Fig. 1 zeigt schematisch ein Durchflussmessgerät 1, dessen Führungsstruktur 2 aus einer Messleitung 3 - eine alternative Bezeichnung ist Messrohr - besteht. Diese Messleitung 3 wird dabei von einem - hier nicht dargestellten - Medium durchströmt, dessen Massedurchfluss durch das nach dem Coriolis-Prinzip arbeitenden Durchflussmessgerät 1 bestimmt wird.

Dafür ist auf der Messleitung 3 ein Schwingungserzeuger 4 vorgesehen, der die Messleitung 3 in mechanische Schwingungen versetzt. Der Schwingungserzeuger 4 arbeitet insbesondere elektromagnetisch. Das strömende Messmedium wirkt sich umgekehrt auf die Schwingungen aus, so dass aus den effektiven Schwingungen der Messleitung 3 der Massedurchfluss ermittelt werden kann. Hierfür ist ein Schwingungserzeuger 5 auf der Messleitung 3 vorgesehen, der die effektiven Schwingungen abgreift.

Ausgehend von der angeregten Schwingung und der detektierten Schwingung wird hier in einer Coriolis-Auswerteeinheit 6 ein Wert für den Massedurchfluss ermittelt und in der gezeigten Variante über einen Feldbus 7 beispielsweise an eine - hier nicht dargestellte - Leitwarte übergeben.

Um die Messgenauigkeit zu erhöhen, ist auf der Außenseite 8 der Messleitung 3 mindestens ein und sind im gezeigten Beispiel sogar zwei Sensorelemente 9 aufgebracht. Bei den Sensorelementen 9 handelt es sich hier jeweils um Dehnungsmesselemente 10 - in der dargestellten Variante insbesondere als Dehnungsmessstreifen ausgestaltet - zur Messung von mechanischen Spannungen in der Messleitung 3.

Dabei ist ein Sensorelement 9 entlang der Längsachse 11 der Messleitung 3 und ist das andere Sensorelement 9 senkrecht dazu angeordnet. Sie erlauben dadurch die Messung bzw. Überwachung der Messleitung 3 in unterschiedliche Richtungen. Oberhalb der Sensorelemente 9 ist ein Trägerelement 12 vorgesehen, das hier insbesondere dem Schutz der Sensorelemente 9 gegenüber der Umwelt dient.

Die Sensorelemente 9 sind jeweils einzeln elektrisch kontaktiert und sind jeweils mit einer eigenen Vorverarbeitungseinheit 13 verbunden, die hier insbesondere der Messung bzw. Ermittlung des jeweiligen elektrischen Widerstands der Sensorelemente 9 dienen.

Verbunden mit den Vorverarbeitungseinheiten 13 ist eine Dehnungsauswerteeinheit 14, die aus den Daten der Vorverarbeitungseinheiten 13 eine Spannung der Messleitung 3 ermittelt und diesen Wert wiederum über den Feldbus 7 an die - hier nicht dargestellte - übergeordnete Leitwarte übermittelt. Dort wird ggf. der Wert für den Massedurchfluss entsprechend korrigiert.

Der Aufbau des Messgerätes 1 zeichnet sich durch einen relativ geringen Raumbedarf aus, wobei durch die zusätzliche Messung der mechanischen Spannung in der Messleitung 3 bzw. deren Längenänderung eine Steigerung der Messgenauigkeit bzw. eine Gewährleistung der konstant hohen Genauigkeit gewonnen wird.

In der Fig. 2 sind mehrere Sensorelemente 9 auf einem Trägerelement 12 aufgebracht. In dieser Variante werden die Sensorelemente 9 zuerst auf das Trägerelement 12 aufgebracht und dort z. B. über eine klebend wirkende Substanz fixiert. Bei der Fertigung wird dann das bestückte Trägerelement 12 um die Außenseite eines Teils der entsprechenden Führungsstruktur gelegt.

Die beiden äußeren Dehnungsmesselemente 10 sind jeweils so angeordnet und ist das Trägerelement 12 so groß ausgestaltet, dass sich diese beiden äußeren Sensorelemente 9 nach dem Aufbringen des Trägerelements 12 auf eine rohrförmige Messleitung einander diametral gegenüberliegen. Hierfür sind auch beide Sensorelemente 9 im Wesentlichen gleich ausgestaltet und gleich orientiert.

Dazwischen befinden sich mehrere andere Dehnungselemente 10, z. B. senkrecht orientiert zu den äußeren Elementen 9, wobei zwei elektrisch in Reihe geschaltet sind. Zusätzlich ist noch ein Temperaturmesselement 15 vorgesehen, das eine Messung der Temperatur der Messleitung bzw. damit auch des Messmediums erlaubt.

In der Fig. 3 ist eine Ausgestaltung dargestellt, in der zwei unterschiedliche Sensorelemente 9 elektrisch in Reihe geschaltet sind. Diese Sensorelemente 9 befinden sich dabei ebenfalls auf einem Trägerelement 12.

Dabei handelt es sich um ein Dehnungsmesselement 10 und um ein Temperaturmesselement 15. In der gezeigten Ausgestaltung sind dies passive Elemente, deren elektrischer Widerstand jeweils abhängig von einer Prozessgröße: Dehnung bzw. Temperatur ist.

Um den elektrischen Widerstand zu bestimmen, wird zwischen den Punkten A und C ein elektrischer Strom eingeprägt und der Spannungsabfall zwischen den Punkten A und B bzw. B und C wird gemessen. Der elektrische Widerstand ergibt sich dann jeweils aus dem Ohm'schen Gesetz.

Diese Ausgestaltung mit den in Reihe geschalteten Sensorelementen 9 zeichnet sich insbesondere dadurch aus, dass auf eine weitere Zuleitung verzichtet werden kann, wie sie bei einer separaten elektrischen Kontaktierung erforderlich wäre. Hierdurch lassen sich die Kosten reduzieren und ist es möglich, auf die beschränkten Platzverhältnisse zu reagieren, da weniger Platz benötigt wird.

Je nach Ausgestaltungen der Sensorelemente kann jedoch auch eine Spannung zwischen A und C gemessen werden, so dass auf den Zwischenabschnitt am Punkt B gänzlich verzichtet werden kann und nur noch eine direkte Verbindung zwischen den zwei Sensorelementen 9 vorzusehen ist.

Bei den in den Fign. 4 und 5 dargestellten Ausgestaltungen verfügt die jeweilige Führungsstruktur 2 für das - nicht dargestellte - Medium über mehr als eine Messleitung 3: nämlich zwei in der Ausgestaltung der Fig. 4 und vier bei der Ausgestaltung der Fig. 5.

In der Ausgestaltung der Fig. 4 ist jeder Messleitung 3 ein Sensorelement 9 zugeordnet. Die relativen Positionen der Sensorelemente 9 zur jeweils zugeordneten Messleitung 3, die sich hier jeweils auf den Umfang der Messleitungen 3 beziehen, unterscheiden sich voneinander. Beide Sensorelemente 9 befinden sich dabei jeweils in einem anderen Raumwinkel bezogen auf eine Ebene senkrecht zur Längsachse der Führungsstruktur 2, die hier senkrecht zur Zeichenebene verläuft und zu der in der gezeigten Ausgestaltung auch die Längsachsen der Messleitungen 3 parallel verlaufen.

Bezogen auf den Umfang liegen sich die beiden Sensorelemente 9 einander direkt gegenüber, so dass hier ein Sensorelement 9 oben und das andere unten angeordnet ist. Axial sind dabei die Sensorelemente 9 in der gezeigten Ausgestaltung auf gleicher Höhe aufgebracht. In einer alternativen - hier nicht dargestellten -Ausgestaltung befinden sich die Sensorelemente 9 axial längs der Längsachse der Führungsstruktur 2 auf unterschiedlichen Höhen.

Diese gegenüberliegende Anordnung der Sensorelemente 9 ist auch in der Ausgestaltung der Fig. 5 zu finden, in der die Führungsstruktur 2 über vier Messleitungen 3 verfügt.

Die Messleitungen 3 sind dabei in Form eines Quadrats in zwei Zweierreihen bzw. zwei Zweierspalten angeordnet. Dabei ist nicht jede Messleitung 3 mit einem Sensorelement 9 versehen, sondern es sind für die vier Messleitungen 3 nur zwei Sensorelemente 9 vorgesehen, so dass eine Kostenreduktion herbeigeführt und der Platzbedarf verringert wird.

Die zwei Sensorelemente 9 befinden sich umfänglich relativ zu den zugehörigen Messleitungen 3 auf unterschiedlichen Positionen. Weiterhin sind die Sensorelemente 9 den Messleitungen 3 zugeordnet, die sich in unterschiedlichen Reihen und unterschiedlichen Spalten befinden.

Die Messleitung 3 des Aufbaus der Fig. 1 ist als gerades Rohr ausgebildet, wohingegen es bei einigen Durchflussmessgeräten im Stand der Technik auch gebogene Rohre in V-, U- oder auch Ω-Form gibt. Außerhalb des gebogenen Rohrs oder der gebogenen Rohre ist meist ein umschließendes Gehäuse vorgesehen.

Eine solche gekrümmte Messleitung 3 zeigt die Fig. 6 mit einem Durchflussmessgerät 1, das insbesondere über zwei parallel zu einander angeordnete - und daher im Schnitt nur einfach dargestellte - Messleitungen 3 verfügt.

Die Krümmung der Rohre erfolgt dabei aus einem gerade verlaufenden Trägerelement 16 heraus, das in ein normales Rohrsystem eingesetzt werden kann. Umgeben sind die Messleitungen 3, von denen hier im Schnitt nur eine zu sehen ist, von einem Gehäuse 17.

Der Schwingungserzeuger 4 befindet sich innerhalb des Bogens der Messleitung 3 und der Schwingungsaufnehmer 5 außerhalb davon. Beide werden jeweils über eine Halterung 18 mit den Messleitungen 3 verbunden, wodurch auch die Kräfte und Momente übertragen werden. Die Halterungen 18 umfassen dabei die Messleitungen 3 mindestens mit einem Winkel von 90°. Die Halterungen 18 sind weiterhin so ausgestaltet, dass der Schwingungserzeuger 4 bzw. der Schwingungsaufnehmer 5 einen vorgebbaren Abstand zur Rohrwandung der Messleitungen 3 aufweisen.

Durch das Gehäuse 17 erstreckt sich noch eine Temperierungsleitung 19, die entweder durch ein Erwärmen oder ein Abkühlen für gleichbleibende Temperaturen sorgt und gleichzeitig auch noch im Inneren als Verstärkungselement des Gehäuses 17 dient.

Vorgesehen als Sensorelemente 9 auf der Messleitung 3 sind ein Dehnungsmesselement 10 zur Messung bzw. Überwachung der Dehnung der Messleitung 3 und ein Temperaturmesselement 15. Über das Temperaturmesselement 15 und das Zusammenspiel zwischen dem Messmediums und der Temperierungsleitung 19 wird zusätzlich noch ein Energieharvester 20 betrieben, der hier einer Energiegewinnung durch Ausnutzung einer Temperaturdifferenz dient.

Da die Messleitung 3 gebogen ist, wird die Orientierung bzw. Positionierung der Sensorelemente 9 jeweils auf einen gemeinsamen Rohrabschnitt bzw. auf die ungebogene Messleitung 3 und damit die gerade verlaufende Längsachse bezogen. Als Längsachse und für die Referenzierung wird in einer Ausgestaltung Bezug auf den Verlauf des Messmediums innerhalb der Messleitung 3 genommen.

## Patentansprüche

1. Durchflussmessgerät (1), das nach dem Coriolis-Prinzip arbeitet, mit einer von einem Medium durchströmbaren Führungsstruktur (2) und mit mindestens zwei auf einer Außenseite (8) der Führungsstruktur (2) aufgebrachten Sensorelementen (9) zur Bestimmung und/oder Überwachung mindestens einer Prozessgröße und wobei eines der zwei Sensorelemente (9) als Dehnungsmesselement (10) und das andere der zwei Sensorelemente (9) als Temperaturmesselement (15) ausgestaltet ist,
**dadurch gekennzeichnet,**
**dass** das Dehnungsmesselement (10) und das Temperaturmesselement (15) elektrisch in Reihe geschaltet sind und dass das Durchflussmessgerät zum Messen eines Spannungsabfalls über die einzelnen Sensorelemente (10, 15) eingerichtet ist und zwar in Verbindung mit einem Mittenabgriff über jedes Sensorelement (10, 15) einzeln, d. h. über einen gleichsam zu beiden Sensorelementen (10, 15) gehörigen Kontakt.

2. Durchflussmessgerät (1) nach Anspruch 1, **dadurch gekennzeichnet, dass** die Führungsstruktur (2) mindestens zwei Messleitungen (3) aufweist, dass jeweils ein Sensorelement (9) auf einer Außenseite (8) einer Messleitung (3) angeordnet ist, und dass die relativen Positionen der Sensorelemente (9) umfänglich um die jeweilige Messleitung (3) unterschiedlich sind.

3. Durchflussmessgerät (1) nach Anspruch 2, **dadurch gekennzeichnet, dass** die Sensorelemente (9) jeweils in einem anderen Winkelbereich in einer Ebene senkrecht auf einer Längsachse (11) der Führungsstruktur (2) angeordnet sind.

4. Durchflussmessgerät (1) nach Anspruch 3, **dadurch gekennzeichnet, dass** die zwei Sensorelemente (9) derartig jeweils auf einer Messleitung (3) angeordnet sind, dass die zwei Sensorelemente (9) sich umfänglich einander gegenüberliegen.

5. Durchflussmessgerät (1) nach einem der Ansprüche 1 bis 4, **dadurch gekennzeichnet, dass** die Führungsstruktur (2) mindestens vier Messleitungen (3) aufweist, die in Zweierreihen übereinander und Zweierspalten nebeneinander angeordnet sind, dass zwei Sensorelemente (9) vorgesehen sind, dass jeweils ein Sensorelement (9) einer Messleitung (3) zugeordnet ist, dass die relativen Positionen der Sensorelemente (9) umfänglich um die jeweilige Messleitung (3) jeweils unterschiedlich sind, und dass sich die Messleitungen (3), denen die zwei Sensorelemente (9) zugeordnet sind, in unterschiedlichen Reihen und Spalten der vier Messleitungen (3) befinden.

## Claims

1. Flowmeter (1), which operates using the Coriolis principle, having a guide structure (2) that can have medium flowing through it, and having at least two sensor elements (9) applied to an outer surface (8) of the guide structure (2) for determining and/or monitoring at least one process variable and wherein one of the two sensor elements (9) is designed as a strain-measuring element (10) and the other of the two sensor elements (9) is designed as a temperature measuring element (15),
**characterized in**
**that** the strain-measuring element (10) and the temperature measuring element (15) are electrically connected in series and that the flowmeter is designed for measuring a voltage drop across the individual sensor elements (10, 15), namely in connection with a center tap across each sensor element (10, 15) individually, i.e. across a contact that equally belongs to both sensor elements (10, 15).

2. Flowmeter (1) according to claim 1, **characterized in that** the guide structure (2) has at least two measuring lines (3), that, in each case, one sensor element (9) is arranged on an outer surface (8) of a measuring line (3), and that the relative positions of the sensor elements (9) are different in circumference around the respective measuring line (3).

3. Flowmeter (1) according to claim 2, **characterized in that** the sensor elements (9) are each arranged in a different range of angles in a level perpendicular to a longitudinal axis (11) of the guide structure (2).

4. Flowmeter (1) according to claim 3, **characterized in that** the two sensor elements (9) are each arranged on a measuring line (3), so that the two sensor elements (9) circumferentially each are opposite one another.

5. Flowmeter (1) according to any one of claims 1 to 4, **characterized in that** the guide structure (2) has at least four measuring lines (3), which are superimposed in two rows and mounted flush on one another in two columns, that two sensor elements (9) are provided, that each sensor element (9) is associated with one measuring line (3), that the relative positions of the sensor elements (9) differ circumferentially around the respective measuring line (3), and that the measuring lines (3), with which the two sensor elements (9) are associated, are located in different rows and columns of the four measurement lines (3).

## Revendications

1. Appareil de mesure de débit (1) qui fonctionne selon le principe de Coriolis, comprenant une structure de guidage (2) pouvant être parcourue par un milieu et comprenant au moins deux éléments de capteur (9) montés sur un côté extérieur (8) de la structure de guidage (2), pour déterminer et/ou surveiller au moins une grandeur de processus et dans lequel l'un des deux éléments de capteur (9) est configuré sous forme d'élément de mesure d'allongement (10) et l'autre des deux éléments de capteur (9) est configuré sous forme d'élément de mesure de température (15),
**caractérisé en ce que**
l'élément de mesure d'allongement (10) et l'élément de mesure de température (15) sont montés électriquement en série, et **en ce que** l'appareil de mesure de débit est prévu pour mesurer une chute de tension par le biais des éléments de capteur individuels (10, 15) et ce, en liaison avec un point milieu sur chaque élément de capteur (10, 15) individuellement, c'est-à-dire par le biais d'un contact appartenant en même temps aux deux éléments de capteur (10, 15).

2. Appareil de mesure de débit (1) selon la revendication 1, **caractérisé en ce que** la structure de guidage (2) présente au moins deux câbles de mesure (3), **en ce qu'**à chaque fois un élément de capteur (9) est disposé sur un côté extérieur (8) d'un câble de mesure (3), et **en ce que** les positions relatives des éléments de capteur (9) sur la périphérie autour du câble de mesure respective (3) sont différentes.

3. Appareil de mesure de débit (1) selon la revendication 2, **caractérisé en ce que** les éléments de capteur (9) sont à chaque fois disposés dans une autre plage angulaire dans un plan perpendiculaire à un axe longitudinal (11) de la structure de guidage (2).

4. Appareil de mesure de débit (1) selon la revendication 3, **caractérisé en ce que** les deux éléments de capteur (9) sont disposés à chaque fois sur un câble de mesure (3) de telle sorte que les deux éléments de capteur (9) soient opposés l'un à l'autre sur la périphérie.

5. Appareil de mesure de débit (1) selon l'une quelconque des revendications 1 à 4, **caractérisé en ce que** la structure de guidage (2) présente au moins quatre câbles de mesure (3), qui sont disposés en deux rangées l'un au-dessus de l'autre et en deux colonnes l'un à côté de l'autre, **en ce que** deux éléments de capteur (9) sont prévus, **en ce qu'**à chaque fois un élément de capteur (9) est associé à un câble de mesure (3), **en ce que** les positions relatives des éléments de capteur (9) sur la périphérie autour du câble de mesure respectif (3) sont à chaque fois différentes, et **en ce que** les câbles de mesure (3) auxquels sont associés les deux éléments de capteur (9) se trouvent dans des rangées et colonnes différentes des quatre câbles de mesure (3).
